# EUROPÄISCHE PATENTSCHRIFT

(11) **EP 1 378 161 B1**
(45) Veröffentlichungstag und Bekanntmachung des Hinweises auf die Patenterteilung: **04.06.2008**
(21) Anmeldenummer: 03013672.5
(22) Anmeldetag: 17.06.2003
(51) Int. Cl.: A01F 12/44

(54) **Wind-Siebeinrichtung**
Pneumatic sieving device
Dispositif pneumatique de tamisage

(30) Priorität: 27.06.2002 DE 10228866
(43) Veröffentlichungstag der Anmeldung: 07.01.2004
(73) Patentinhaber: CLAAS Selbstfahrende Erntemaschinen GmbH, 33428 Harsewinkel (DE)
(72) Erfinder: Claes, Ulrich, 49201 Dülmen (DE)

(56) Entgegenhaltungen:
- EP-A- 0 121 094
- EP-A- 0 475 453
- EP-A- 0 624 310
- EP-A- 0 641 706
- DE-A- 3 932 945
- US-A- 4 627 446
- US-A- 4 821 744

## Beschreibung

Die Erfindung betrifft eine weiter verbesserte Wind-Siebeinrichtung für Halmfrucht-Erntemaschinen.

Eine der Hauptforderungen beim Mähdrusch besteht darin, bei geringsten Verlusten eine hohe, marktfähige Qualität des Erntegutes zu erreichen. Hierbei hat der beim Mähdrusch erzielbare Reinigungsgrad einen entscheidenden Einfluss auf die Qualität und dadurch auch auf den Marktwert des Erntegutes.

Moderne Erntemaschinen sind daher mit ständig weiter verbesserten und relativ aufwendigen Einrichtungen ausgestattet, die dem Dreschwerk nachgeordnet sind und zur Aufbereitung und Reinigung des Erntegutes dienen. Hierzu gehören neben Abscheide- und Schüttlereinrichtungen, zur intensiven Abscheidung der Körner aus dem Stroh, ein Vorbereitungs- bzw. Förderboden, mit dem das Gemisch aus Körnerfrüchten, Spreu und Strohresten nicht nur gefördert, sondern auch für den anschließenden Reinigungsprozess in Fließschicht vergleichmäßigt bzw. für den Reinigungsprozess vorbereitet wird. Für den Reinigungsprozess ist eine Anordnung mit verschiedenen Sieben vorgesehen sowie ein leistungsstarkes Reinigungsgebläse, mit einem möglichst ganzflächigen Winddruck und einer gleichmäßigen Windverteilung, um die Verunreinigungen des Erntegutes aus den Erntemaschinen auszutragen. Der Vorbereitungs- oder Förderboden und die Siebe sind nach Möglichkeit so zueinander angeordnet, dass an den Übergabestellen des aus Körnerfrüchten, Spreu und Strohresten bestehenden Gutes Fallstufen entstehen, die vom Druckwind des Reinigungsgebläses durchströmt werden. Auf diese Weise können bereits an einer ersten Fallstufe annähernd 25% der aus Spreu und Kurzstroh bestehenden Verunreinigungen aus den Erntemaschinen ausgetragen und die volle Siebfläche der nachgeschalteten Siebe für die Reinigung der Körnerfrüchte genutzt werden.

Untersuchungen im praktischen Einsatz derartiger Wind - Siebeinrichtungen haben ergeben, dass der Reinigungsgrad, insbesondere an den Fallstufen, und die auftretenden Erntegutverluste maßgeblich von einem homogenen, turbulenzfreien Druckwind mit einer gleichmäßigen Windverteilung über die Breite des Vorbereitungs- oder Förderbodens und der Siebe beeinflusst werden und auftretenden Turbulenzen die Homogenität und die gleichmäßige Verteilung des Druckwindes nachteilig beeinträchtigen.

Eine Wind - Siebeinrichtung, wie vorstehend beschrieben, ist beispielweise aus EP 0 121 094 B1 bekannt. Unterhalb eines annähernd horizontal angeordneten, belüfteten Zuführbodens ist mit Abstand zu diesem ein Körnerboden angeordnet, der in etwa die gleiche Länge aufweist, wie der Siebteil des Zuführbodens. Der erforderliche Druckwind für die Reinigung wird vom einem Reinigungsgebläse abgeleitet, dessen Gehäuse mit einem zweiten Gebläseausgang ausgestattet ist, wobei dieser zweite Gebläseausgang auf den Raum zwischen dem Zuführboden und dem Körnerboden ausgerichtet ist. Der am zweiten Gebläseausgang austretende Druckwind durchströmt vorrangig den Siebabschnitt des Förderbodens, während am Ende des Körnerbodens der Raum zwischen dem Förderboden und dem Körnerboden völlig unzureichend mit Reinigungsluft versorgt wird. Die Anordnung und Ausrichtung des zweiten Gebläseausganges und der freie Durchgang des Druckwindes durch den belüften Zuführboden verursachen und begünstigen die Entstehung von Turbulenzen im Luftstrom. Eine konzentrierte Luftströmung und eine zielgerichtete Steuerung der Reinigungsluft sind in dieser Reinigungsstufe dadurch nicht erreichbar. Daraus folgt, dass das Reinigungsergebnis unzufrieden ist und das Entstehen höherer Erntegutverluste begünstigt wird.

Eine weiter verbesserte Wind-Siebeinrichtung dieser Gattung wird in EP 0 641 706 vorgeschlagen. Durch die Ausbildung und den Anschluss des zweiten, zusätzlichen Ausganges des Reinigungsgebläses an den Zuführboden wird eine günstigere Windleitung der Reinigungsluft erreicht, wobei die Unterseite des Zuführbodens gleichzeitig der Windleitung dient. Unmittelbar an den Zuführboden, der wie in EP 0 121 094 B1 relativ kurz ausgebildet ist, schließt sich ein Reinigungssieb bzw. ein belüfteter Bodenabschnitt an, der von der Reinigungsluft frei und unkontrollierbar durchströmt wird. Dadurch entstehen im Luftstrom der Reinigungsluft wiederum Turbulenzen, die sich nachteilig auf den Reinigungsgrad und auf die weitgehende Reduzierung der Erntgutverluste an den Wind-Siebeinrichtungen auswirken. Turbulenzen im Luftstrom der Reinigungsluft werden außerdem noch durch Luftleitbleche hervorgerufen, die quer zur Strömungsrichtung der Reinigungsluft im Anschluss an den kurzen Zuführboden unterhalb des belüfteten Bodenabschnittes angeordnet sind. Die auftretenden Turbulenzen werden zudem noch dadurch verstärkt, dass die gesamte Anordnung zusammen mit dem Zuführboden und dem belüfteten Bodenabschnitt in axialer Richtung alternierend schwingt und diese Schwingbewegungen der Luftströmung der Reinigungsluft teilweise entgegengerichtet sind bzw. die windführenden Räume sich dadurch rhythmisch weiter oder enger stellen.

Ein weiterer, nicht unbedeutender Nachteil dieser Wind - Siebeinrichtung besteht darin, dass aufgrund der konstruktiven Ausbildung und Anordnung der Reinigungseinrichtungen mehrere Gebläse zur Bereitstellung der notwendigen Reinigungsluft vorgesehen werden müssen.

Auch mit der Lösung nach EP 0 641 706 ist eine kontrollierte und steuerbare Luftführung der Reinigungsluft nicht möglich. Der zusätzliche Windstrom aus dem zweiten Gebläseausgang ist breit verteilt, lediglich auf den belüfteten Bodenabschnitt des Zuführbodens gerichtet, während die Endbereiche des belüfteten Bodenabschnittes nicht in ausreichendem Maße mit Druckwind bzw. mit Reinigungsluft versorgt sind.

Der Erfindung liegt daher die Aufgabe zugrunde, eine Windleiteinrichtung für den aus dem zusätzlichen Gebläseausgang des Reinigungsgebläses abgeleiteten Druckwind vorzusehen, mit der gleichmäßige, von Turbulenzen weitgehend freie Windverhältnisse geschaffen werden können und eine konzentrierte, steuerbare Luftführung des Druckwindes möglich ist.

Erfindungsgemäß wird diese Aufgabe durch eine Wind - Siebeinrichtung nach den im Anspruch 1 angegebenen Merkmalen gelöst. Weitere vorteilhafte Ausbildungen der Erfindung ergeben sich aus den Unteransprüchen 2 bis 11.

Nach der vorgeschlagenen Lösung ist unterhalb eines flächig geschlossenen Vorbereitungsbodens zur Aufbereitung des aus einem Dreschwerk kommenden Erntegutgemisches, das aus Körnerfrüchten, Spreu und Kurzstroh besteht, oder einem anderweitigen Förderboden, der das Erntegutgemisch zu den Reinigungs- und Siebeinrichtungen einer Erntemaschine transportiert, ein wandseitig geschlossener Luftleitkanal angeordnet und mit dem Vorbereitungs- oder Förderboden fest verbunden, der sich über mindestens eine Teillänge und mindestens eine Teilbreite des jeweiligen Arbeitsorgans erstreckt und mit seinem Eingang vorzugsweise an einen zusätzlichen Ausgang eines Druckwindgebläses so abgedichtet angeschlossen ist, dass über die Anschlussverbindung keine Fremdluft durch den Druckwindstrom angesaugt werden kann und/oder zusätzliche Luftturbulenzen im Druckwindstrom hervorgerufen werdeh. Der Luftleitkanal bildet vorzugsweise mit dem Vorbereitungs- oder Förderboden eine gemeinsame Baueinheit. Nach einem weiteren Merkmal dient der Vorbereitungs- oder Förderbodens gleichzeitig als obere Wand des Luftleitkanals, während die Seitenwände des Luftleitkanals fest an den Vorbereitungs- oder Förderboden angeschlossen sind. Daraus ergibt sich, dass sich der Luftleitkanal zusammen mit dem Vorbereitungs- oder Förderboden bewegt, die, wie allgemein bekannt, zum Transport der auf ihren Arbeitsflächen befindlichen Erntegutgemisches von einem geeigneten Antrieb mit einer oszillierenden Bewegung beaufschlagt werden.

Das Profil des Innenraumes des Luftleitkanals weist im Bereich seines Ausganges, der mit dem Luftleitkanaleingang nahezu auf einer gemeinsamen, konstruktiven Ebene angeordnet ist, einen abgesenkten Abschnitt auf, an den sich zum Ausgang hin ein ansteigender Abschnitt anschließt. Durch die dargelegte erfindungsgemäße Ausbildung und Anordnung des Luftleitkanals entsteht in seinem Innenbereich eine Beruhigungszone, in der die im Druckwindstrom mitgeführten Turbulenzen abgebaut werden, wobei mit Hilfe des erfindungsgemäß gestalteten Ausgangsbereiches des Luftleitkanals dieser homogene und steuerbare Druckwind über die gesamte Breite der Arbeitsorgane gleichmäßig verteilt und konzentriert den Übergabestellen zur Weiterleitung des Erntegutgemisches an das nachfolgende Arbeitsorgan der Wind - Siebeinrichtung bzw. den Fallstufen und in der vorliegenden Ausführungsform einem ersten Siebrechen, der in Verlängerung des Vorbereitungsbodens vorsehen ist, zugeführt werden kann.

Die Bodenwand des ansteigenden Abschnittes des Luftleitkanals ist vorteilhafter Weise als gezahnte Arbeitsfläche ausgebildet und besitzt am Luftkanalausgang eine Stufe, die sich unter dem Ende des Vorbereitungsbodens befindet und mit dem Ende des Vorbereitungsbodens eine erste Fallstufe bildet, an der bereits der größte Anteil an Spreu und Kurzstroh durch den im Luftleitkanal aufbreiteten und ausschließlich über den Luftleitkanal konzentriert zugeführten Druckwind herausgelöst und ausgetragen wird.

An die Stufe in der Bodenwand des Luftleitkanals schließt sich eine weitere, gezahnte Arbeitsfläche an, die oberhalb eines ersten Siebes endet und mit diesem eine weitere Fallstufe bildet. Diese Fallstufe und der im Anschluss an die weitere, gezahnte Arbeitsfläche angeordnete Siebrechen werden vom Druckwind durchströmt, der über den relativ langen Hauptausgang des Druckwindgebläses zugeführt wird und bedingt durch den langen Hauptausgang, der als Beruhigungszone wirkt, im allgemeinen keine Turbulenzen aufweist.

Mit der vorgeschlagenen Lösung für eine Wind - Siebeinrichtung können an den Fallstufen die im Erntegutgemisch enthaltenen Verunreinigungen an Spreu und Kurzstroh weitgehend herausgelöst und abgeführt werden. Somit stehen die vollen Arbeitsflächen der Siebe ausschließlich der Feinreinigung des Korngutes zur Verfügung.

Die obere Wand wird im abgesenkten und ansteigenden Abschnitt des Luftleitkanals zweckmäßiger Weise durch Blechprofile gebildet, die mit dem Vorbereitungs- oder Förderbodens fest verbunden sind und so den Luftkanal im Bereich des Ausganges zusätzlich stabilisieren.

Um das Entstehen von Luftturbulenzen im Bereich der Anschlussstelle zwischen dem zusätzlichen Ausgang des Druckwindgebläses und dem Eingang des Luftleitkanals zu vermeiden, sind der zusätzliche Gebläseausgang und der Eingang des Luftleitkanals auf einer gemeinsamen, konstruktiven Längsachse angeordnet, wobei die Parallelität ihrer Anordnung auch während der oszillierenden Schwingbewegung des Luftleitkanals fortbesteht. Für den abgedichteten Anschluss dient hierbei eine einfache elastische Manschette.

Ein nicht unerheblicher, weiterer Vorteil der erfindungsgemäßen Lösung besteht darin, dass sie problemlos bei allen Mähdreschsystemen, egal welche Art von Dresch- und/oder Trenn- / Vorbereitungseinrichtungen der Wind - Siebreinigung vorgeschaltet sind, kostengünstig eingesetzt werden kann

Die Erfindung soll nachstehend an einem Ausführungsbeispiel näher erläutert werden. In den dazugehörigen Zeichnungen zeigen:

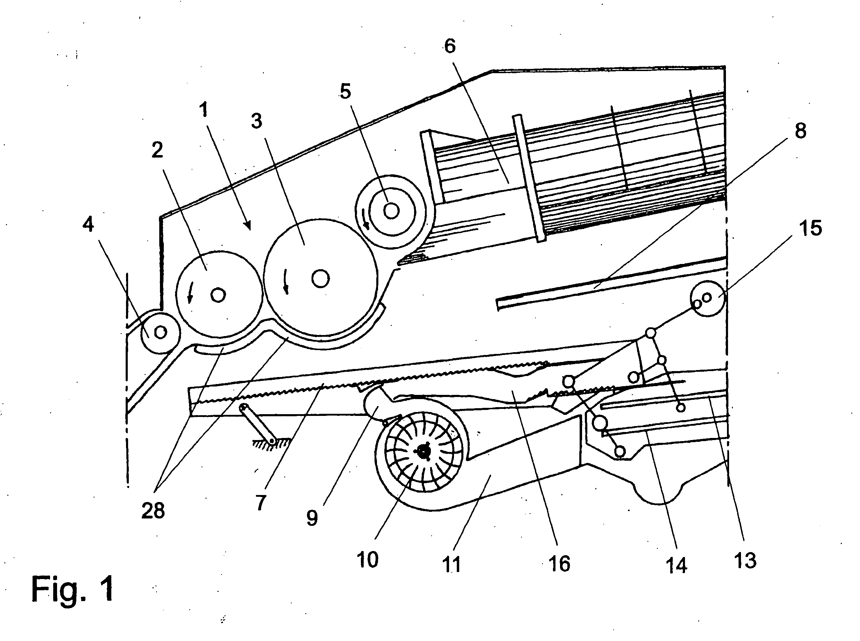

- Fig. 1: die Seitenansicht einer schematischen Darstellung des Dreschwerkes einer Halmfrucht-Erntemaschine mit der nachgeschalteten Wind - Siebeinrichtung, die mit der erfindungsgemäßen Windleiteinrichtung ausgestattet ist;

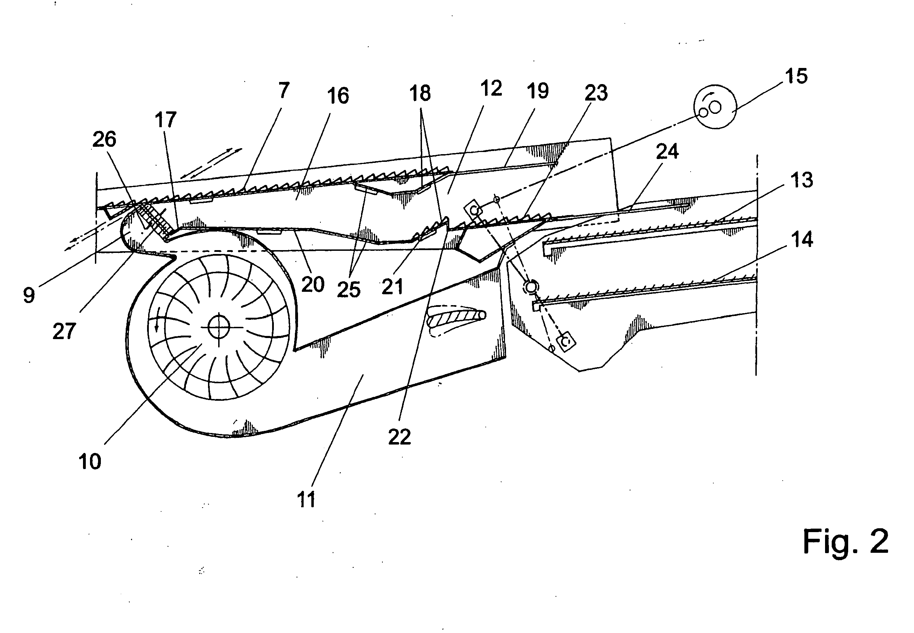

- Fig. 2: die Anordnung und Ausbildung der Windleiteinrichtung in einer vergrößerten Darstellung der Seitenansicht entsprechend Fig. 1.

Die mit Hilfe des Mähwerkes der Erntemaschine (nicht dargestellt) geerntete Halmfrucht wird über den Universal-Schrägförderer 4 dem Dreschwerk 1 zugeführt, das aus dem Beschleuniger 2, der Dreschtrommel 3 und den Dreschkörben 28 besteht. Der größte Anteil der Halmfrüchte wird im Dreschwerk aus dem Stroh herausgelöst und fällt in Form eines Gemisches aus Körnerfrüchten, Spreu und Kurzstroh durch die Öffnungen in den Dreschkörbe 28 auf den Vorbereitungsboden 7, der mit einer gezahnten Arbeitfläche ausgestattet ist.

Nach Passieren des Dreschwerkes 1 wird das Stroh von der Umlenktrommel 5 erfasst und der Abscheideeinrichtung 6 zugeführt. In der Abscheideeinrichtung 6 werden die im Stroh verbliebenen restlichen Anteile der Körnerfrüchte herausgelöst und fallen, wie vorstehend beschrieben, in Form eines Gemisches aus Körnerfrüchte, Spreu und Kurzstroh auf den Rückführboden 8. Dieses Gemisch wird anschließend durch den Rückführboden 8 ebenfalls auf den Vorbereitungsboden 7 geleitet.

Durch den in seinen Abmessungen möglichst groß ausgebildeten Vorbereitungsboden 7 wird das Gemisch aus Körnerfrüchte, Spreu und Kurzstroh gründlich vergleichmäßigt und an einer ersten Fallstufe der wesentlichste Anteil an Verunreinigungen von den Körnerfrüchten getrennt. Anschließend werden die Körnerfrüchte den Reinigungseinrichtungen der Erntemaschine mit den Sieben 13 und 14 zugeführt, in denen die verbliebenen Reste an Verunreinigungen abgeschieden werden und eine Feinreinigung des Erntegutes erfolgt.

Neben dem Vorbereitungsboden 7 wird die Reinigungseinrichtung durch das Druckwindgebläse 10 mit seinen Ausgängen 9 und 11, das obere Sieb 13, das unteren Sieb 14 und im vorliegendem Ausführungsbeispiel durch den erfindungsgemäßen Luftleitkanal 16, gebildet. Zusammen mit dem Vorbereitungsboden 7, an den der Luftleitkanal 16 fest angeschlossen ist, werden die Siebe 13; 14 vom Antrieb 15 oszillierend angetrieben. Die Antriebsverbindung zwischen dem Antrieb 15 und den anzutreibenden Arbeitsorganen ist hierbei so gestaltet, dass die oszillierende Bewegung zwischen dem Vorbereitungsboden 7 mit dem Luftleitkanal 16 und den beiden Sieben 13 und 14 gegenläufig ist.

Um den Reinigungsgrad weiter zu verbessern und insbesondere an den Fallstufen entscheidend zu steigern, besitzt die erfindungsgemäße WindSiebeinrichtung einen wandseitig geschlossenen Luftleitkanal 16, der wie bereits vorstehend dargelegt, mit dem flächig geschlossenen Vorbereitungsboden 7 fest verbunden ist. In einer kostengünstigen Ausführungsvariante dient der flächig geschlossene Vorbereitungsboden 7 gleichzeitig als obere Wand des Luftleitkanals 16. Dabei ist der Luftleitkanal 16, dessen Eingang 17 über eine elastische Manschette 27 an den zusätzlichen Ausgang 9 des Druckwindgebläses 10 abgedichtet angeschlossen ist, so ausgebildet und angeordnet, dass der Eingang 17 und der Ausgang 12 des Luftleitkanals 16 auf einer annähernd gleichen Ebene liegen und der Ausgang 9 des Druckwindgebläses 10 und der Eingang 17 auf einer gemeinsamen Längsachse 26 angeordnet sind. Auf diese Weise entsteht im Innenbereich des Leitleitkanals 16 eine relativ große Beruhigungszone, in der sich auch unter den Bedingungen der oszillierenden Bewegung des Luftleitkanals 16 die im Druckwindstrom mitgeführten Luftturbulenzen abbauen und auflösen.

Die parallele Anordnung zwischen dem Ausgang 9 des Druckgebläses 10 und dem Eingang 17 des Luftleitkanals 16 bleibt auch bei der oszillierenden Bewegung des Leitleitkanals 16 bestehen. Die parallele Anordnung zwischen dem Ausgang 9 und dem Eingang 17und die abgedichtete Verbindung des Luftleitkanals 16 mit dem Druckwindgebläse 10 gewährleisten, dass durch den Druckwindstrom keine Fremdluft angesaugt werden kann und im Anschlussbereich keine zusätzlichen Luftturbulenzen entstehen können, die den Druckwindstrom, wie vorstehend beschrieben, nachteilig beeinflussen.

Erfindungsgemäß weist das Profil des Innenraumes des Luftleitkanals 16 im Bereich seines Ausganges 12 einen abgesenkten Abschnitt 25 auf, an den sich zum Ausgang 12 hin ein ansteigender Abschnitt 18 anschließt. Hierdurch ist gewährleistet, dass ein, in der Beruhigungszone entspannter, von Turbulenzen freier, homogener und in seiner Intensität auf bekannte Weise steuerbarer Druckwindstrom direkt auf eine erste Fallstufe, die zwischen dem Vorbereitungsboden 7 und einer Stufe 22 in der Bodenwand 20 des Luftleitkanals 16 gebildet wird, und auf den am Ende des Vorbereitungsbodens 16 angeordneten Siebrechen 19 gerichtet werden kann und der sowohl die Fallstufe als auch den Siebrechen 19 wirksam durchströmt.

Im Anschluss an die Stufe 22 in der Bodenwand 20 des Luftleitkanals 16 ist eine weitere gezahnte Arbeitfläche 23 angeordnet, die mit einem weiteren Siebrechnen 24 abschließt und oberhalb des ersten Siebes 13 endet. Zwischen dem Abschluss der Arbeitsfläche 23 und dem Sieb 13 entsteht auf diese Weise eine weitere Fallstufe, die vom Druckwind des Druckwindgebläses 10 durchströmt wird, der über den Ausgang 11 in die Sieben 13; 14 gelangt.

Durch den homogenen und turbulenzfreien Druckwindstrom, der die Fallstufen über die gesamte Breite der Wind - Siebeinrichtung mit einer steuerbaren Gleichmäßigkeit durchströmt, wird weitgehend der größte Anteil der Verunreinigungen an Spreu und Kurzstroh aus dem Erntegutgemisch herausgelöst und ausgetragen. Die vorhandenen Siebflächen haben dadurch nur einen erheblich reduzierten Mengenanteil an Verunreinigungen abzuscheiden.

Im abgesenkten und ansteigenden Abschnitt 25; 18 wird die obere Wand des-Luftleitkanals 16 durch Blechprofile gebildet, die mit dem Vorbereitungsboden 7 fest verbunden sind und den Luftleitkanal 16 im Bereich seines Ausganges 12 zusätzlich stabilisieren. Die Bodenwand 20 des Luftleitkanals 16 ist im ansteigenden Abschnitt 18 ferner als gezahnte Arbeitsfläche 21 ausgebildet, über die Erntegut und Erntegutgemisch, das in den Luftleitkanal 16 eindringt, durch die oszillierende Bewegung der Baugruppe wieder ausgetragen und auf die Arbeitsfläche 23 geleitet wird.

### BEZUGSZEICHENAUFSTELLUNG

- 1: Dreschwerk
- 2: Beschleuniger
- 3: Dreschtrommel
- 4: Universal-Schrägförderer
- 5: Umlenktrommel
- 6: Abscheideeinrichtung
- 7: Vorbereitungsboden
- 8: Rückführboden
- 9: zusätzlicher Ausgang (Druckwindgebläse)
- 10: Druckwindgebläse
- 11: Ausgang (Druckwindgebläse)
- 12: Ausgang (Luftleitkanal)
- 13: oberes Sieb
- 14: unteres Sieb
- 15: Antrieb
- 16: Luftleitkanal
- 17: Eingang (Luftleitkanal)
- 18: ansteigender Abschnitt (Luftleitkanal)
- 19: Siebrechen
- 20: Bodenwand
- 21: Arbeitsfläche
- 22: Stufe
- 23: Arbeitsfläche (Bodenwand)
- 24: Siebrechen
- 25: abgesenkter Abschnitt (Luftleitkanal)
- 26: Längsachse
- 27: Manschette
- 28: Dreschkorb

## Patentansprüche

1. Wind-Siebeinrichtung für Halmfrucht-Emtemaschinen mit einem Reinigungsgebläse (10), das Ober zumindest einen zusätzlichen Gebläseausgang (9) verfügt, mit dem Reinigungsluft auf eine Übergabestelle des Erntegutes an ein nachgeordnetes Reinigungsorgan (13, 14) einer Wind - Reinigungseinrichtung zugeführt wird,
**dass** unterhalb eines Vorbereitungsbodens (7) ein wandseitig geschlossener Luftleitkanal (16) angeordnet ist, der sich über mindestens eine Teillänge und mindestens eine Teilbreite des Vorbereitungsbodens (7) erstreckt und mit dem zusätzlichen Ausgang (9) eines Druckwindgebläses (10) verbunden ist **dadurch gekennzeichnet, daß** der Eingang (17) und der Ausgang (12) des Luftleitkanals (16) nahezu auf einer Ebene angeordnet sind.

2. Wind-Siebeinrichtung nach Anspruch 1,
**dadurch gekennzeichnet,**
**dass** im Bereich des Ausganges (12) das Innenraumprofil des Luftleitkanals (16) zunächst abgesenkt ist und danach zum Ausgang (12) hin ansteigend verläuft.

3. Wind-Siebeinrichtung nach einem oder mehreren der vorhergehenden Ansprüche,
**dadurch gekennzeichnet,**
**dass** der ansteigende Abschnitt (18) des Luftleitkanals (16) auf eine erste Fallstufe ausgerichtet ist.

4. Wind-Siebeinrichtung nach einem oder mehreren der vorhergehenden Ansprüche,
**dadurch gekennzeichnet,**
**dass** der ansteigende Abschnitt (18) der Bodenwand (20) des Luftleitkanals (16) eine gezahnte Arbeitsfläche (21) besitzt und am Ausgang (12) mit einer Stufe (22) abschließt, an der sich eine als Förderboden wirkende, gezahnte Arbeitsfläche (23) anschließt.

5. Wind-Siebeinrichtung nach einem oder mehreren der vorhergehenden Ansprüche,
**dadurch gekennzeichnet,**
**dass** die gezahnte Arbeitsfläche (23) oberhalb eines ersten Siebes (13) der Siebbaugruppe endet.

6. Wind-Siebeinrichtung nach einem oder mehreren der vorhergehenden Ansprüche,
**dadurch gekennzeichnet,**
**dass** der Luftleitkanal (16) und der Vorbereitungsboden (7) eine gemeinsame Baueinheit bilden.

7. Wind-Siebeinrichtung nach einem oder mehreren der vorhergehenden Ansprüche,
**dadurch gekennzeichnet,**
**dass** die obere Wand des Luftleitkanals (16) durch den Vorbereitungsbodens (7) gebildet wird und die Seitenwände des Luftleitkanals (16) an den Vorbereitungsboden (7) fest angeschlossen sind.

8. Wind-Siebeinrichtung nach einem oder mehreren der vorhergehenden Ansprüche,
**dadurch gekennzeichnet,**
**dass** der Luftleitkanal (16) zusammen mit dem Vorbereitungsboden (7) schwingbeweglich angeordnet ist.

9. Wind-Siebeinrichtung nach einem oder mehreren der vorhergehenden Ansprüche,
**dadurch gekennzeichnet,**
**dass** die obere Wand im abgesenkten und ansteigenden Abschnitt (25; 18) des Luftleitkanals (16) durch Blechprofile gebildet wird, die mit dem Vorbereitungsbodens (7) fest verbunden sind.

10. Wind-Siebeinrichtung nach einem oder mehreren der vorhergehenden Ansprüche,
**dadurch gekennzeichnet,**
**dass** der Eingang (17) des Luftleitkanal (16) und der Ausgang (9) des Druckwindgebläses (10) eine gemeinsamen Längsachse (26) besitzen und die Parallelität ihrer Anordnung auch während der Schwingbewegungen von Vorbereitungsboden (7) und Luftleitkanal (16) fortbesteht.

11. Wind-Siebeinrichtung nach einem oder mehreren der vorhergehenden Ansprüche,
**dadurch gekennzeichnet,**
**dass** der Eingang (17) des Luftleitkanals (16) mit dem Ausgang (9) des Druckwindgebläses (10) durch eine elastische Manschette (27) abgedichtet verbunden ist.

## Claims

1. A wind sieve device for machines which harvest cereals, having a cleaning blower (10) which has available to it at least one additional blower outlet (9) by means of which cleaning air is supplied onto a transfer location for crop material to a cleaning member (13, 14) of a wind cleaning device situated downstream, such that under a preparation floor (7) there is arranged an air conducting channel (16) which is closed at the wall side and which extends over at least part of the length and over at least part of the width of the preparation floor (7) and which communicates with the additional outlet (9) of a pressure wind blower (10), **characterised in that** the intake (17) and outlet (12) of the air conducting channel (16) are disposed almost on one plane.

2. A wind sieve device according to Claim 1,
**characterised in that** in the region of the outlet (12) the profile of the interior space of the air conducting channel (16) is initially downwardly descending, and thereafter is upwardly ascending towards the outlet (12).

3. A wind sieve device according to one or more of the preceding claims,
**characterised in that** the upwardly ascending section (18) of the air conducting channel (16) is oriented onto a first fall stage.

4. A wind sieve device according to one or more of the preceding claims,
**characterised in that** the upwardly ascending section (18) of the bottom wall (20) of the air conducting channel (16) has a toothed working surface (21) and at the outlet (12) terminates with a stage (22) adjacent to which is a toothed working surface (23) which acts as a conveyance floor.

5. A wind sieve device according to one or more of the preceding claims,
**characterised in that** the toothed working surface (23) terminates above a first sieve (13) of the sieve assembly.

6. A wind sieve device according to one or more of the preceding claims,
**characterised in that** the air conducting channel (16) and the preparation floor (7) form one common constructional unit.

7. A wind sieve device according to one or more of the preceding claims,
**characterised in that** the upper wall of the air conducting channel (16) is formed by the preparation floor (7), and the side walls of the air conducting channel (16) are fixedly adjacent to the preparation floor (7).

8. A wind sieve device according to one or more of the preceding claims,
**characterised in that** the air conducting channel (16) is arranged so that it is oscillatingly movable with the preparation floor (7).

9. A wind sieve device according to one or more of the preceding claims,
**characterised in that** the upper wall in the downwardly descending and upwardly ascending sections (25; 18) of the air conducting channel (16) is formed by sheet metal profile members which are fixedly connected to the preparation floor (7).

10. A wind sieve device according to one or more of the preceding claims,
**characterised in that** the intake (17) of the air conducting channel (16) and the outlet (9) of the pressure wind blower (10) have a common longitudinal axis (26), and the parallelism of their arrangement subsists even during the oscillating movements of the preparation floor (7) and air conducting channel (16).

11. A wind sieve device according to one or more of the preceding claims,
**characterised in that** the intake (17) of the air conducting channel (16) communicates in sealed off manner with the outlet (9) of the pressure wind blower (10) by means of an elastic sleeve (27).

## Revendications

1. Dispositif de tamisage à air pour des machines à récolter les céréales, comprenant une soufflerie de nettoyage (10) qui dispose d'au moins une sortie de soufflerie supplémentaire (9) avec laquelle de l'air de nettoyage est amené à un point de transfert du produit récolté vers un organe de nettoyage aval (13, 14) d'un dispositif de nettoyage à air, un conduit d'air fermé côté parois (16) qui s'étend au moins sur une longueur partielle et au moins sur une largeur partielle d'une table de préparation (7) étant disposé sous la table de préparation (7) et relié à la sortie supplémentaire (9) d'une soufflerie de vent comprimé (10), **caractérisé en ce que** l'entrée (17) et la sortie (12) du conduit d'air (16) sont disposées approximativement dans un plan.

2. Dispositif de tamisage à air selon la revendication 1, **caractérisé en ce que**, dans la région de la sortie (12), le profil de l'espace intérieur du conduit d'air (16) présente un tracé d'abord descendant et ensuite montant en direction de la sortie (12).

3. Dispositif de tamisage à air selon l'une ou plusieurs des revendications précédentes, **caractérisé en ce que** la portion ascendante (18) du conduit d'air (16) est orientée vers une première cascade.

4. Dispositif de tamisage à air selon l'une ou plusieurs des revendications précédentes, **caractérisé en ce que** la portion ascendante (18) de la paroi de fond (20) du conduit d'air (16) possède une surface de travail dentelée (21) et se prolonge à la sortie (12) par un gradin (22) auquel fait suite une surface de travail dentelée (23) faisant fonction de table de transport.

5. Dispositif de tamisage à air selon l'une ou plusieurs des revendications précédentes, **caractérisé en ce que** la surface de travail dentelée (23) se termine au-dessus d'un premier tamis (13) de l'ensemble de tamisage.

6. Dispositif de tamisage à air selon l'une ou plusieurs des revendications précédentes, **caractérisé en ce que** le conduit d'air (16) et la table de préparation (7) forment une unité de construction commune.

7. Dispositif de tamisage à air selon l'une ou plusieurs des revendications précédentes, **caractérisé en ce que** la paroi supérieure du conduit d'air (16) est formée par la table de préparation (7) et les parois latérales du conduit d'air (16) sont raccordées rigidement à la table de préparation (7).

8. Dispositif de tamisage à air selon l'une ou plusieurs des revendications précédentes, **caractérisé en ce que** le conduit d'air (16) est disposé de manière à pouvoir effectuer un mouvement oscillant conjointement avec la table de préparation (7).

9. Dispositif de tamisage à air selon l'une ou plusieurs des revendications précédentes, **caractérisé en ce que** la paroi supérieure dans les portions descendante et ascendante (25 ; 18) du conduit d'air (16) est formée par des profilés en tôle qui sont solidaires de la table de préparation (7).

10. Dispositif de tamisage à air selon l'une ou plusieurs des revendications précédentes, **caractérisé en ce que** l'entrée (17) du conduit d'air (16) et la sortie (9) de la soufflerie de vent comprimé (10) possèdent un axe longitudinal (26) commun et le parallélisme de leur disposition est maintenu même pendant les mouvements oscillants de la table de préparation (7) et du conduit d'air (16).

11. Dispositif de tamisage à air selon l'une ou plusieurs des revendications précédentes, **caractérisé en ce que** l'entrée (17) du conduit d'air (16) est reliée de manière étanche à la sortie (9) de la soufflerie de vent comprimé (10) par une manchette élastique (27).
